# EUROPEAN PATENT APPLICATION

(11) **EP 2 565 747 A2**
(43) Date of publication of application: **06.03.2013**
(21) Application number: 12182341.3
(22) Date of filing: 30.08.2012
(51) Int. Cl.: G06F 1/26

(54) **Programmable power management system**

(30) Priority: 30.08.2011 US 201113221651
(71) Applicant: General Electric Company, Schenectady, NY 12345 (US)
(72) Inventor: Adams, Arthur Vincent, Atlanta, GA 30339-8402 (US)
(74) Representative: Picker, Madeline Margaret

(57) **Abstract**

A system is provided that includes a power management system. The power management system includes a data storage configured to store instructions. The instructions are configured to control a plurality of power outlet modules of a power distribution device. The power management system also includes a controller configured to execute the instructions to switch the plurality of power outlet modules between a plurality of modes of operation.

## Description

### BACKGROUND OF THE INVENTION

The subject matter disclosed herein relates to power management, and more specifically to a power distribution device such as a power strip.

Devices connected to power distribution devices often require different levels of power depending on their operational state. For instance, in full operational mode, a device may require more power than in standby mode. Depending on the devices connected to the power distribution device, a variety of modes of operation may be utilized to reduce the waste of supplying excessive power to devices. For example, certain devices may have dependent power relationships, such as master and slave devices, where a master device controls the power required for the slave devices. In other scenarios, the devices connected to the power distribution device may have independent relationships, where the operational modes of each device determine the power consumption required for the device. In many situations, it is difficult to predict the types or combinations of devices that may be connected to the power distribution device. Thus, it may be difficult to predict the ideal mode of operation for power outlet modules of the power distribution device. Furthermore, because devices may be removed or added to the power distribution device, the ideal operational mode for the power outlet modules may change, because devices may be removed or added to the power management system.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a power management system. The power management system includes a data storage configured to store instructions configured to control a plurality of power outlet modules of a power distribution device. The power management system also includes a controller configured to execute the instructions to switch the plurality of power outlet modules between a plurality of modes of operation.

In a second embodiment, a system includes a power distribution device. The power distribution device includes a user interface configured to receive operational mode configuration inputs from a user of the power management system. The power distribution device also includes one or more power outlet modules configured to selectively switch between two or more modes of operation based upon the operational mode configuration inputs, wherein the operation configuration inputs relate to at least one of a current measurement of the one or more power outlet modules or a system time of the power management system. Further, the power distribution device includes a power management system comprising a controller configured to monitor operational characteristics of the one or more power outlet modules and to control the modes of operation of the one more power outlet modules by selectively providing power to the one or more power outlet modules based upon the operational characteristics of the one or more power outlet modules and the operational mode configuration inputs.

In a third embodiment, a system includes a power distribution device. The power distribution device includes a user interface. The user interface includes at least one user input configured to receive inputs from a user of the power management system to adjust configuration settings of one or more power outlet modules of the power management system to allow for selective switching between two or more modes of operation of the power outlet modules based upon the inputs.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 illustrates an embodiment of a power distribution device, e.g., a power strip;
FIG. 2 is a schematic diagram of the power distribution device of FIG. 1, depicting various components in further detail;
FIG. 3 is a schematic diagram of a power outlet module of the power distribution device of FIG. 1, enabled to switch between a variety of operational modes;
FIG. 4 illustrates an embodiment of a user interface of the power distribution device;
FIG. 5 illustrates an embodiment of a power distribution device in the form of an in-wall outlet;
FIG. 6 illustrates an embodiment of a power distribution device in the form of an extension cord;
FIG. 7 is a schematic diagram of a power distribution device in the form of a battery backup device;
FIG. 8 is a schematic diagram of a power distribution device in the form of a power conditioning unit;
FIG. 9 is a left-side perspective view of an embodiment of a power distribution device in the form of a wall mount unit; and
FIG. 10 is a right-side perspective view of the power distribution device of FIG. 9.

### DETAILED DESCRIPTION OF EMBODIMENTS OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Many devices that connect to power distribution devices (e.g., a power strip, a wall-unit, or a uninterrupted power supply) require different levels of power depending on their current operational state. In some instances, the power consumption for some devices may be dependent on other devices connected to the power distribution device. For instance, it may be desirable to reduce power to some secondary devices when a primary device is in standby mode. In other instances, a user may desire that devices receive full power during specific time periods, while receiving less power during other time periods. Due to the multitude of devices that may be connected to a power distribution device, and thus the multitude of modes of operation that may be desirable for the power distribution device, the disclosed embodiments provide a power distribution device that may switch between two or more modes of operation.

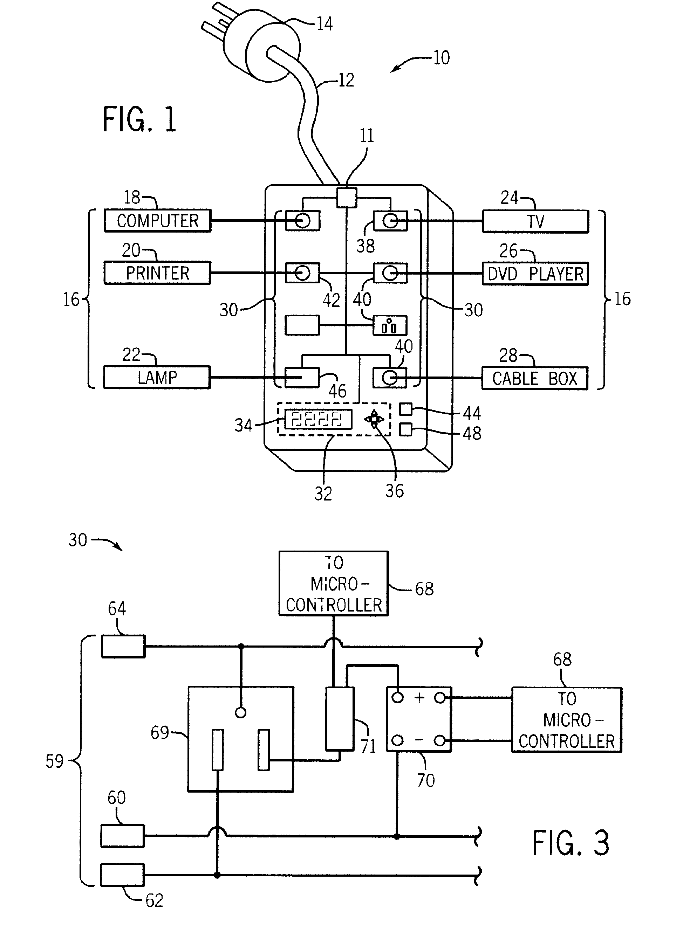

FIG. 1 illustrates an embodiment of a power distribution device 10 with a power management system 11. In the illustrated embodiment, the power distribution device 10 is a power strip. However, in other embodiments, the power distribution device 10 may include a multi-outlet extension cord, a power distribution unit, a multi-outlet wall-mount unit, or a battery backup device. The power distribution device 10 includes a main power supply cable 12 that connects to a power source via a power plug 14. As power is supplied to the power distribution device 10, devices 16 connected to the power distribution device 10 (e.g., computer 18, printer 20, lamp 22, television 24, DVD player 26, and cable box 28) are supplied power through power outlet modules 30. Depending on the devices 16 connected to the power distribution device 10, it may be desirable to control the power supplied to the devices 16 in a variety of ways. Such control may be enabled through the use of the power management system 11.

One such way to control the devices may be through the use of a user interface 32. User interface 32 may include an alphanumeric display 34 and user inputs (e.g., push buttons 36). Alternatively, the user interface 32 may include a touch screen or other input element to be used in conjunction with a graphical user interface. The user interface 32 may provide statistics for each power outlet module 30 (e.g., current measurements, voltage measurements, configuration settings, etc.). In one embodiment, the display 34 may be a liquid crystal display (LCD) or a touch screen display. The user inputs (e.g., push buttons 36) may receive inputs from a user to, for example, adjust elements of the power distribution device 10. For example, the inputs may provide configuration settings for one or more of the power outlet modules 30 to allow for selective switching between two or more modes of operation.

For example, one operational mode may include a master/slave mode, where one of the power outlet modules 30 is set to be a master power outlet module 38 that is always provided power, and one or more power outlet modules is set to be a slave power outlet module 40. The slave power outlet modules 40 are selectively provided power based upon a level of electrical current being above a threshold value in the master power outlet module 38. A master/slave operational mode may be desirable when the operation of certain devices 16 depend on other devices 16. For example, the DVD player 26 and cable box 28 send a video and audio output to the television 24. Without the television 24 being activated, the video and audio outputs of the DVD player 26 and cable box 28 may not be useful. Thus, to reduce energy waste, when the television 24 is off, it may be desirable to remove power from the DVD player 26 and cable box 28. To insure that the DVD player 26 and cable box 28 are off when the television 24 is off, the power outlet module 30 connected to the television 24 is set as the master power module 38. The power outlet modules 30 connected to the DVD player 26 and cable box 28 are set as slave power outlet modules 40. When the television 24 is on, the power distribution device 10 may detect an increased electrical current as opposed to when the television 24 is off or in a standby state. When detecting that the device 16 (e.g., television 24) connected to the master power module 38 is on, the power distribution device 10 provides power to the slave power outlet modules 40, and thus the devices 16 (e.g., DVD player 26 and cable box 28) connected to the slave power outlet modules 40. When the television 24 is turned off or placed in standby mode, the power distribution device 10 detects a decreased electrical current pull from the master power outlet module 38 and thus removes power from the slave power outlet modules 40.

In some embodiments, the power distribution device 10 detects that the slave power outlet modules 40 should be turned off when the electrical current pulled from the master power outlet 38 is below a threshold of 100 milliamps. However, in other embodiments the threshold may be 50, 150, 200 milliamps or in the range of 50-200 milliamps. When the power distribution device 10 detects an electrical current shift (e.g., the current drops below the threshold) such that power should be removed or added to the slave power outlet modules 40, the power distribution device 10 may remove or add power to the slave power outlet modules 40 instantly (e.g., all slave power outlet modules 40 are supplied power at once), or in a staggered fashion (e.g., the slave power outlet modules 40 are supplied power at different times until all of the slave power outlet modules 40 are supplied power). For example, when configured to provide instant power to slave power outlet modules 40, each of the slave power outlet modules 40 is provided power as soon as the power distribution device can provide it. However, when configured to provide power in a staggered mode, one or more of the slave power outlet modules 40 is provided power at a different time than the other slave power outlet modules 40. For example, the system 10 may sequentially power on each slave power outlet module 40 one after another with a time delay between each sequential power on. The time delay may be approximately .1 to 2, 0.2 to 1.5, or .5 to 1 second. The staggered mode may help to reduce an initial in-rush current caused by providing power to numerous slave power outlet modules 40 at once. Such in-rush may cause damage to either the devices 16 or the power distribution device 10.

Additionally, some devices 16 do not enter a standby mode to conserve energy. For example, the printer 20 may be an always-on device with no standby power mode. To emulate a standby mode in such a device 16, one operational mode that may be desirable for such a device connected to the power distribution device 10 is a green "eco" mode. In the eco mode, the power distribution device 10 detects idle or phantom electrical currents (e.g., a drop in current due to one or more devices 16 not utilizing full power) in a power outlet module 30 and, upon such detection, withdraws power from the power outlet module 30. Upon power being withdrawn from the power outlet module 30, a user can request that power be re-supplied to the power outlet module 30 (e.g., by submitting a request through the user interface 32). The phantom electrical currents are detected by comparing measured electrical current of the power outlet modules 30 configured to run in eco mode with an eco mode threshold. A phantom current is detected when the current measurements are below the eco threshold. The eco threshold can be set for each individual power outlet module 30 configured to run in eco mode or may be set for all power outlet modules 30 running in eco mode. For example, a user may desire to place the power outlet module 42 connected to the printer 20 in eco mode. The user may request (e.g., via the user interface 32) that power outlet module 42 run in eco mode with a threshold value set at an idling current for the printer 20. Thus, when the printer 20 is not in use, the current draw from the printer 20 may fall below the threshold, and the power distribution device 10 will withdraw the supplied power to power outlet module 42. To re-supply power to the printer 20, a user of the power distribution device 10 may request that the power be restored to the power outlet module 42 via the user interface 32.

In some embodiments, the eco mode may work in conjunction with a real time clock 44. The real time clock 44 allows a user of the power distribution device 10 to provide time-based criteria for the eco mode execution. For example, the user may configure the eco mode to detect the phantom current for a certain threshold time (e.g., 30 minutes) before withdrawing power from the power outlet module 42. Another example may include disregarding the eco threshold all together during specific hours of the day (e.g., office hours: 8:00 AM - 5:00 PM) via an override mode. Thus, the printer would stay active during normal office hours, but would be susceptible to falling below the eco threshold and having the supplied power withdrawn outside of the office hours.

A third operational mode that may be desirable for the power distribution device 10 is a programmable control mode. The programmable control mode allows a user to schedule the activation of certain devices 16 (e.g., lamp 22) by supplying an activation plan for individual power outlet modules 30. For example, a user of the power distribution device 10 may desire to deter thieves by turning on the lamp 22 at certain times while on vacation. The user may input an activation plan for the power outlet module 46 connected to the lamp via the user interface 32 or by uploading a file created through a computer application via a communications port 48. In one embodiment, the activation plan includes a power outlet module identifier, and target times/dates that the module should be activated and deactivated. The activation plan may include a re-occurrence schedule (i.e., every other Thursday) or may include a randomizer that activates a chosen power outlet module 30 at random times.

Each of the above mentioned operational modes may be run on specific power outlet modules 30 concurrently with other operational modes being run on other power outlet modules 30. For example, the power outlet module 30 connected to the computer 18 may be configured to run in an always on state, because the computer 18 has its own power saving features. Meanwhile, power outlet module 42 may be configured to run in eco mode, power outlet module 46 may be configured to run in programmable control mode, and master power outlet module 38 and slave power outlet modules 40 may be configured to run in master/slave mode. At any time, the individual power outlet modules 30 may be reconfigured to run in an alternate operational mode. In the event of detecting a fault or error condition, the power distribution device 10 may default the entire system to a preferred default operational mode. For example, if an error condition is detected, the power distribution device 10 may default to the master/slave mode with a specific pre-determined master power outlet module 38 and the rest of the power outlet modules 30 being slave power outlet modules 40. A user of the power distribution device 10 may be able to provide the preferred default operational mode via the user interface 32 or by uploading configuration settings via the communications port 48.

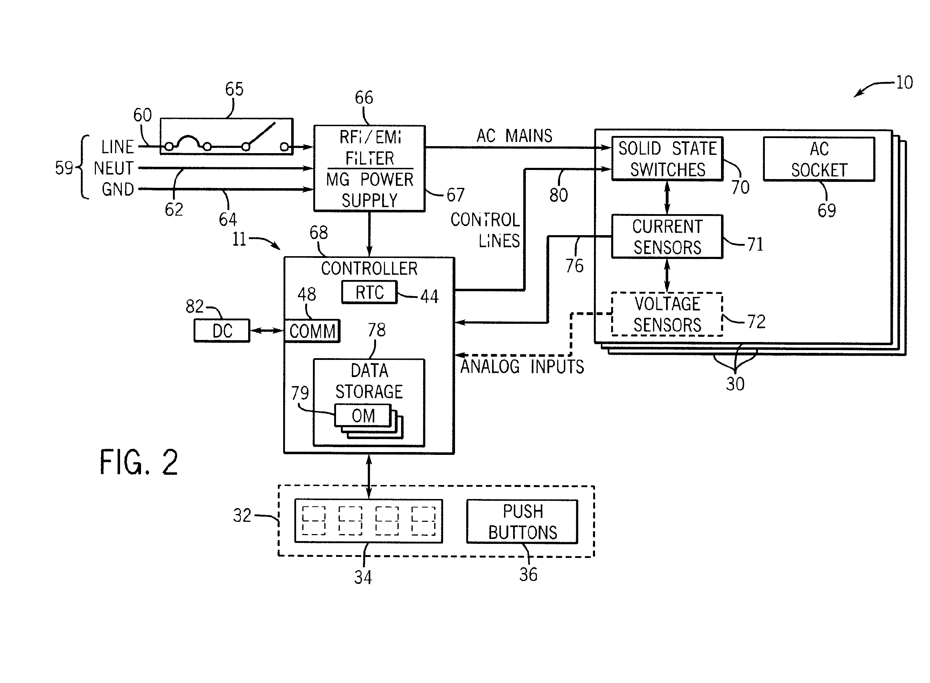

As previously discussed, each power outlet module 30 may run in different operational mode configurations. The power distribution device 10 provides a user with customizable power outlet modules for a variety of implementations for a variety of devices 16 that may be connected to the power distribution device 10. FIG. 2 illustrates an embodiment of components of the power distribution device 10 of FIG. 1, configured with customizable power outlet modules 30.

As illustrated in FIG. 2, the power distribution device 10 includes a power management system 11 that enables control of power supplied through the power distribution device 10. The power distribution device further includes AC power input lines 59 (e.g., power line 60, neutral line 62, and ground line 64) that supply power to the power distribution device 10 when a main power switch 65 is activated. When the main power switch 65 is deactivated, the power supplied to the power distribution device 10 through the power input lines 59 is removed. The power distribution device 10 also includes a radio frequency interference (RFI)/electromagnetic interference (EMI) filter 66 that suppresses conducted interference on the power line 60 and provides some surge protection to the power distribution device 10. A controller power supply 67 may also be included in the power distribution device 10. The controller power supply 67 receives power from the AC power input lines 59, and provides power to the power management system 11 (e.g., controller 68). In other embodiments, a transformer-less capacitive power supply with a bridge rectifier may be utilized to provide increased current capacity to the controller 68. The power distribution device 10 also includes one or more power outlet modules 30 that are selectively enabled to provide power to connected devices 16. Each power outlet module 30 may include an AC socket 69, solid state switches 70, current sensors 71, and optionally, voltage sensors 72. The devices 16 connect to the power distribution device 10 via the AC sockets 69. For example, the AC sockets 69 may include NEMA 1-15, NEMA 5-15, CEE 7/16, CEE 7/17, BS 546, CEE 7/5, CEE 7/7, BS1363, SI 32, AS/NZS 3112, SEV 1011, CEI 23-16/VII, or BS 546 sockets. The solid state switches selectively switch a supplied power on and off to the power outlet modules 30. The current sensors 71 output an analog signal 76 that varies linearly with the AC power provided by the AC power input lines 59 to each of the power outlet modules 30. Thus, the current sensors 71 may be used to provide the current measurements from the power outlet modules 30 to the controller 68 included in the power distribution device 10. In certain embodiments the current sensors 71 may include iron ferrite over a wire conductor or a resistive element where flux measurements are obtained. In addition to receiving current readings from the current sensors 71, some controller 68 embodiments may use voltage sensor 72 inputs to control the power outlet modules 30. The voltage sensors 72 measure a voltage of the power outlet modules 30 through the use of a resistor. The voltage measurement may be used in conjunction with the current measurements provided by the current sensors 71 to provide values utilized in the operational mode control of the power outlet modules 30.

The controller 68 may include the real time clock 44, the communications port 48, and data storage 78. The data storage 78 may include controller 68 readable instructions that enable the controller 68 to implement a variety of operational modes 79 for the power distribution device 10, by selectively supplying power to one or more of the power outlet modules 30 via q 80. To implement the instructions, the controller 68 may first obtain the operational mode configuration for each of the power outlet modules 30. The operational mode configuration may be provided by a user of the power distribution device 10, by inputting the configuration into the user interface 32 or by providing configuration data from a device 82 via the communications port 48. Additionally, the communications port 48 (e.g., wired or wireless) may be utilized to import new operational mode instructions. In some embodiments, the communications port 48 may be a wireless data connection, a universal serial bus (USB) data connection, or a dongle connection for a load monitoring/control device such as a device using a Z-Wave or Zigbee protocol. Next, the controller 68 receives the current readings for each of the power outlet modules 30. The controller 68 may obtain system time data from the real time clock 44. Next, the controller 68 may compare the configuration data with operational inputs (e.g., the system time data and the current readings provided as inputs to the controller 68). Utilizing the operational mode 79 instructions, the controller 68 selectively provides power to the power outlet modules 30 based upon the operational characteristics of the power outlet modules 30 and the configuration settings.

In order to enable each power outlet module 30 to be individually customized for different operational mode configurations, each power outlet module 30 may utilize individualized circuitry. FIG. 3 illustrates an embodiment of a power outlet module 30 enabled to be switched according to an assigned operational mode configuration. As previously discussed, the AC power input lines 59 (e.g., power line 60, neutral line 62, and ground line 64) may provide power to the power outlet modules 30. Each of the power outlet modules 30 may be selectively switched off, or have power withdrawn, when the solid state switch 70 is switched off. The solid state switch 70 is controlled by the controller 68 coupled to the solid state switch 70. When the solid state switch 70 is switched on, power is supplied from the power line 60 through the solid state switch 70 and the current sensor 71 to the AC socket 69. As the power flows through the current sensor 71, a current measurement is detected and sent to the controller 68. Based upon the operation mode configuration settings provided to the controller 68 and the operational characteristics (e.g., the measured current from the current sensors 71 and/or the time or a duration measured from the real time clock 44), the controller 68 controls the solid state switch 70 of each power outlet module 30. Thus, the controller 68 may control each power outlet module 30 of the power distribution device 10 to function in a customized operational mode, such as the master/slave mode, the eco mode, or the programmable control mode.

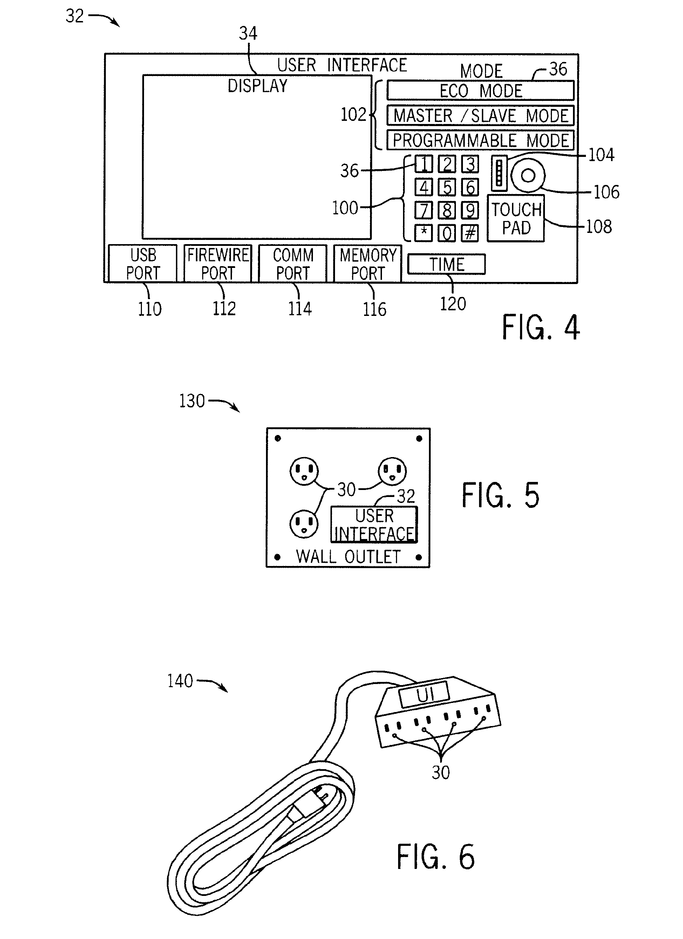

FIG. 4 provides an embodiment of a user interface 32 that may be included in a power distribution device 10. The user interface 32 may be used to set the various operational modes and configuration settings of the power distribution device 10. The user interface 32 may include a display 34, push buttons 36 (e.g., an alphanumeric keypad 100 and/or mode selection buttons 102), one or more dials 104, a joystick or trackball 106, and/or a touch pad 108. The display 34 may include a liquid crystal display (LCD) and may include touch screen capabilities for accepting a user input. The alphanumeric keypad 100 may enable numbers and letters to be input into the power distribution device 10. Dial 104 may be rotated and joystick/trackball 106 may be moved to provide input into the user interface 32. For example, when the dial 104 rotates or joystick/trackball 106 moves, a navigation input may be provided to the power distribution device 10. Touchpad 108 may interpret a user touch and provide input to the power distribution device 10. The user interface 32 may also include various input ports. For example, the illustrated embodiment includes a USB port 110, a firewire port 112, a communications port 114, and a memory port 116. Each of these input ports may provide an input for the user interface 32. Additionally, the user interface 32 may include a time display 120, that displays the current system time of the power distribution device 10.

The power distribution device 10 may include many different forms. FIGS. 5-10 illustrate a variety of power distribution devices 10 in accordance with the current specification. For example, FIG. 5 illustrates an in-wall outlet 130. The in-wall outlet 130 attaches to a wall (e.g., through an electrical box disposed in the wall). The in-wall outlet 130 includes power outlet modules 30 and may include a user interface 32 used to configure the operational modes and configuration settings for the in-wall outlet 130.

FIG. 6 illustrates an extension cord 140 with multiple power outlet modules 30. A user interface 32 may be disposed on a portion of the extension cord 140. The extension cord 140 may be useful in providing power outlet modules 30 at an extension distance from an in-wall outlet. The power outlet modules 30 are capable of being configured in a plurality of operational modes. For example the user interface 32 may be used to provide operational mode and configuration settings for the extension cord 140.

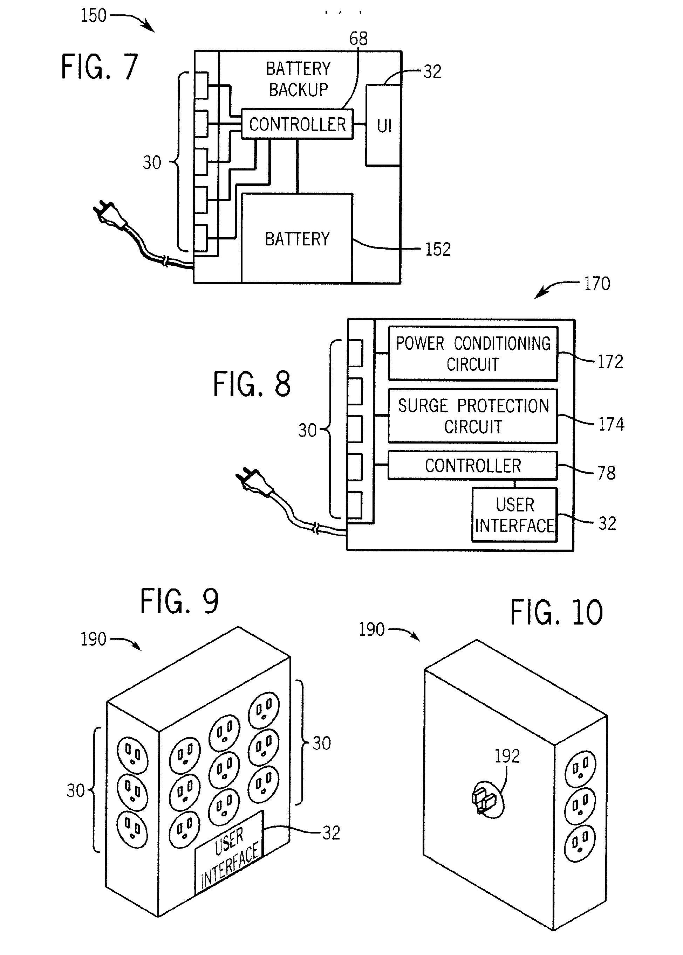

The power distribution device 10 may also include a battery backup device 150, as illustrated in FIG. 7. The battery backup device 150 may use a battery 152 to temporarily provide power to the power distribution device 10 upon an interruption in power being supplied to power distribution device 10. The battery 152 may provide power to the controller 68 and the power outlet modules 30. The battery backup device 150 may include a user interface 32, used to configure the operational mode and configuration settings of the battery backup device 150.

FIG. 8 illustrates an embodiment of the power distribution device 10 including a power conditioning unit 170. The power conditioning unit 170 may include power conditioning circuitry 172 configured to improve the quality of power being delivered through the power conditioning unit 170. For example, the power conditioning circuitry 172 may regulate a voltage of the power, may suppress noise, or provide transient impulse protection. The power conditioning unit 170 may include surge protection circuitry 174 configured to protect the power conditioning unit 170 from voltage spikes. The power conditioning unit 170 provides conditioned power to the power outlet modules 30, enabled to run in a plurality of operational modes via the controller 78. A user interface 32 may be included in the power conditioning unit 170 to configure the operational mode and configuration settings of the power conditioning unit 170.

FIGS. 9 and 10 provide perspective views of an embodiment of the power distribution device 10 including a wall mount unit 190. The wall mount unit 190 may mount to a wall though an electrical coupling between electrical prongs 192 of the wall mount unit 190 with a wall outlet installed in the wall. The wall mount unit 190 includes power outlet modules 30, enabled to run in a plurality of operational modes via the controller 78. The operational modes and configuration settings may be configured through the use of a user interface 32 that may be included in the wall mount unit 190.

Technical effects of the invention include a programmable power distribution device that is adaptable for use with many different devices and modes of operation. The power distribution device is highly customizable by allowing a user to define operating modes for individual power outlet modules. Additionally, some operational modes may require the power distribution device to detect phantom currents or devices not in use. The power distribution device may be configurable to defme threshold current levels for devices connected to specific power outlet modules 30. Thus, the power distribution device provides a versatile solution for many different devices and/or combination of devices.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
a power management system (11), comprising:
a data storage configured to store instructions to control a plurality of power outlet modules (30) of a power distribution device; and
a controller (68) configured to execute the instructions to switch the plurality of power outlet modules (30) between a plurality of modes of operation.

2. The system of claim 1, comprising a power distribution device (10) having the power management system (11).

3. The system of claim 2, wherein the power distribution device (10) comprises a power strip, a wall outlet, a battery backup, a power conditioning unit, a surge protection unit, a power distribution unit, an extension cord, or a combination thereof.

4. The system of claim 1, 2 or 3, wherein the controller (68) is configured to execute the instructions to independently control each one of the plurality of power outlet modules (30).

5. The system of any preceding claim, wherein the controller (68) is configured to execute the instructions to operate first and second power outlet modules of the plurality of power outlet modules (30) simultaneously in respective first and second operational modes of the plurality of modes of operations, wherein the first and second operational modes are different from one another.

6. The system of any preceding claim, wherein the plurality of modes of operation comprises a master/slave mode, or an eco mode, or a programmable control mode, or a combination thereof.

7. The system of claim 6, wherein the plurality of modes of operation comprises the master/slave mode, the eco mode, and the programmable control mode.

8. The system of any preceding claim, wherein the instructions are configured to selectively operate one or more of the plurality of power outlet modules in a master/slave mode, the master/slave mode is configured to provide power continuously to a master power outlet module of the plurality of power outlet modules, and the master/slave mode is configured to provide power selectively to a slave power outlet module of the plurality of power outlet modules if a sensed current of the master power outlet module is above a standby threshold current.

9. The system of claim 8, wherein the master/slave mode comprises selectively removing power to a plurality of slave power outlet modules, in a staggered fashion, when the sensed current level of the master power outlet module is below the standby threshold current.

10. The system of claim 8 or claim 9, wherein the controller (68) is configured to set a default of the one or more power outlet modules to the master/slave mode upon detection of a fault or error condition.

11. The system of any preceding claim, wherein the instructions are configured to selectively operate one or more of the plurality of power outlet modules in an eco mode, wherein the eco mode is configured to provide power to an eco power outlet module of the plurality of power outlet modules if a sensed current of the eco power outlet module is above a standby threshold current.

12. The system of claim 11, wherein the eco mode comprises an override mode that is configured to provide power to the eco power outlet module regardless of the sensed current, for a specified override time period.

13. The system of any preceding claim, wherein the instructions are configured to selectively operate one or more of the plurality of power outlet modules (30) in a programmable control mode, wherein the programmable control mode is configured to provide power to the plurality of power outlet modules based upon an operational configuration that is programmable by a user.

14. The system of claim 13, comprising a real time clock (44) configured to provide a time to the controller (68), wherein the operational configuration comprises a duration or time setting to selectively provide power to one or more of the power outlet modules, and the controller is configured to selectively provide power to the one or more power outlet modules based upon the duration or time setting and the time provided by the real time clock.

15. A system, comprising:
a power distribution device (10), comprising:
a user interface (32) configured to receive operational mode configuration inputs from a user of the power management system;
one or more power outlet modules (30) configured to selectively switch between two or more modes of operation based upon the operational mode configuration inputs, wherein the operational mode configuration inputs relate to at least one of a current threshold of the one or more power outlet modules or a time; and
a controller (68) configured to monitor operational characteristics of the one or more power outlet modules (30), wherein the controller (68) is configured to control the modes of operation of the one more power outlet modules (30) by selectively providing power to the one or more power outlet modules (30) based upon the operational characteristics and the operational mode configuration inputs.

16. The system of claim 15, wherein:
the controller (68) comprises a communications port (48), a data storage (78), and a real time clock (44), wherein the communications port comprises a wireless communications port or a wired communications port; and/or
each of the one or more power outlet modules (30) comprises a current sensor to provide a sensed current to the controller as at least a portion of the operational characteristics.

17. A system, comprising:
a power distribution device (10), comprising:
a user interface (32), comprising:
at least one user input configured to receive an input from a user to adjust configuration settings of one or more power outlet modules (30) of the power distribution device (10) to enable selective switching between two or more modes of operation of the power outlet modules; and
wherein, prefereably, the at least one user input comprises at least one button, dial, toggle switch, keypad, joysticks, or a combination thereof, wherein the user interface comprises a display screen configured to provide a visual representation of the configuration settings to the user.
